# EUROPÄISCHE PATENTSCHRIFT

(11) **EP 0 333 123 B1**
(45) Veröffentlichungstag und Bekanntmachung des Hinweises auf die Patenterteilung: **15.06.1994**
(21) Anmeldenummer: 89104481.0
(22) Anmeldetag: 14.03.1989
(51) Int. Cl.: H04Q 11/04, G06F 9/46, G06F 9/44, H04Q 3/545

(54) **Modular strukturiertes ISDN-Kommunikationssystem**
Modulary structured ISDN communication system
Système de communication RNIS à structure modulaire

(30) Priorität: 15.03.1988 DE 3808639; 30.09.1988 DE 3833351
(43) Veröffentlichungstag der Anmeldung: 20.09.1989
(73) Patentinhaber: SIEMENS AKTIENGESELLSCHAFT, 80333 München (DE)
(72) Erfinder: Bachinger, Gerhard, D-8029 Sauerlach (DE); Barkmeyer, Thomas, D-8000 München 70 (DE); Kroesa, Erhard, D-8038 Groebenzell (DE); Siegmund, Wolfgang, Dr., D-8000 München 60 (DE); Werres, Bernhard, D-8032 Gräfelfing (DE)

(56) Entgegenhaltungen:
- EP-A- 0 196 661
- US-A- 4 747 040
- ISDN im Büro HICOM, Sonderausgabe Telcom Report 1985, Berlin, DE, Seiten 26-31; W.Puls: "HICOM - das erste ISDN-Kommunikationssystem für private Netze"
- ISDN im Büro HICOM, Sonderausgabe Telcom Report 1985, Berlin, DE, Seiten 32-37; R. Lux: "Server als Hintergrundintelligenz bieten mehr Kommunikationsleistung am Arbeitsplatz"
- ISDN im Büro HICOM, Sonderausgabe Telcom Report 1985, Berlin, DE, Seiten 67-75; G.Ott et al.: "HICOM-Software von heute für morgen"
- ISDN im Büro HICOM, Sonderausgabe Telcom Report 1985, Berlin, DE, Seiten 76-83; J.Albath: "Integrierte Server des ISDN-Kommunikationssystems HICOM"
- Microprocessor and Peripheral Handbook, Volume 1, Microprocessor, Oktober 1987, Santa Clara, US, Seiten 1-348; "High Performance 32-bit CHMOS Microprocessor with Integrated Memory Management"
- MINI MICRO CONFERENCE RECORD, Session 19, Paper 1, Mai 1984, NEW YORK, US, Seiten 1-5; D.A. Baker: "IBM Personal Computer Software Development Environment"

## Beschreibung

Die Erfindung betrifft ein modular strukturiertes ISDN-Kommunikationssystem nach dem Oberbegriff des Patentanspruchs 1.

Derartige modular strukturierte digitale Kommunkationssysteme dienen zur Verbindung von Endgeräten mit vielfältigen Leistungsmerkmalen untereinander und zur Verbindung dieser Endgeräte mit Kommunikationsnetzen, insbesondere öffentlichen Netzen.

Durch eine Sonderausgabe von "Telcom Report" - ISDN im Büro - 1985 ISBN 3-8009-3846-4, Siemens Aktiengesellschaft, ist ein derartiges Kommunikationssystem bekannt, an das unter anderem digitale Telefone, Fernkopierer, Teletext- und Bildschirmtextstationen anschließbar sind.

Neben einer Durchschalteinheit, an die diese Geräte angeschlossen sind, gehört zu den Modulen des Kommunikationssystems eine sogenannte Betriebs-Datenservereinheit, die einen systembetriebstechnischen Funktionskomplex sowie verschiedene optionale Datenanwendungsfunktionen umfaßt; die Datenanwendungsfunktionen können geladen und dann aktiviert werden. Es kann auch statt der Betriebs-Datenservereinheit bzw. zusätzlich zu dieser ein spezieller Datenserver in das System integriert werden, der ausschließlich für Datenapplikationen belegt werden kann. Wesentliche Datenanwendungsfunktionen sind in diesem Zusammenhang:

### Datentransportfunktionen

Diese Funktionen umfassen den Transport verschiedenartiger Daten zwischen dem eigentlichen Kommunkationssystem und lokalen bzw. entfernten Datenbe- und - verarbeitungssystemen. Zu solchen zu übertragenden Daten zählen unter anderem Gebührendaten, verkehrsstatistische Daten sowie unterschiedliche System- und Anwenderdateien

### Datenerfassungsfunktionen

Diese Funktionen dienen dem Einrichten, Bearbeiten und Löschen von Dateien auf unterschiedlichen Datenträgern zum Zwecke der Datenerfassung. Dies erfolgt beispielsweise im Zusammenhang mit der Verbindungsdatenaufzeichnung für die Gebührenermittlung sowie mit dem Erfassen verkehrsstatistischer Daten für das Überwachen der Systemauslastung.

### Datenbearbeitungsfunktionen

Zu solchen Bearbeitungsfunktionen gehört beispielsweise das Aufbereiten von Gebührendaten nach unterschiedlichen anwendungsspezifischen Kriterien zur Ausgabe auf Terminals und Datenträger.

Alle diese Datenanwendungsfunktionen werden durch Softwareprozesse realisiert, die in der Betriebs-Datenservereinheit bzw. in einem speziellen Datenserver implementiert sind. Die einzelnen Einheiten bzw. Server sind betriebstechnisch und sicherheitstechnisch integriert. Dies wird insbesondere durch eine technologische Integration in Form einheitlicher Prozessoren, Betriebssysteme und Speicher in den Servern erleichtert.

Als Betriebssystem für dieses Kommunkationssystem ist eine Modifikation des bekannten Betriebssystems iRMX 286 vorgesehen, dessen wesentliche Kriterien 'multi-tasking' und 'multi-programming' sind; dieses Betriebssystem zählt zur Gattung der sogenannten Real-Time-Betriebssysteme (Echtzeitverarbeitungs-Betriebssystem).

Für andere Computersysteme, insbesondere im Bereich der Personalcomputer und der Mehrplatzsysteme sowie der großen DV-Anlagen sind einige weitverbreitete Betriebssysteme bekannt, die im Hinblick auf ihre typische Funktionsstruktur allgemein als Timesharing-Systeme bezeichnet werden. Für solche Betriebssysteme steht eine Fülle von verschiedensten Applikationsprogrammen zur Verfügung, die weitestgehend unabhängig von dem System sind, auf dem sie ablaufen.

Die der Erfindung zugrundeliegende Aufgabe besteht darin, ein Timesharing-Betriebssystem derart in ein Kommunkationssystem einzufügen, daß unter dem Timesharing-Betriebssystem geführte Datenapplikationen ohne zusätzlichen Adaptionsaufwand in das Kommunikationssystem eingefügt werden können und daß vom Realtime-Betriebssystem verwaltete Daten und Datenapplikationen dem Zugriff des Timesharing-Betriebssystems überstellt werden können.

Gelöst wird diese Aufgabe erfindungsgemäß durch die im Kennzeichen des Patentanspruchs 1 angegebenen Merkmale.

Als wesentlicher Vorteil der Erfindung ist anzusehen, daß das Timesharing-Betriebssystem nahezu ausschließlich die Rechnerleistung des den Ausgangspunkt der Erfindung darstellenden modularen Kommunikationssystems nutzt und insbesondere - abgesehen vom Speicherbedarf für Programmsubsysteme und Dateien - keine Aufwendungen oder Änderungen von Hardware-Bestandteilen erfordert.

Als in Form des Applikationsmoduls eingebrachtes Timesharing-Betriebssystem kommt beispielsweise das UNIX Operating System in Frage, für das eine umfangreiche Dokumentation bekannt ist.

Wesentliches Strukturmerkmal der Erfindung ist das im Interkommunikations-Datensegment vorgesehene Datenfeld zur Aufnahme von u.a. mit dem Informationstransportsystem austauschbaren Meldungen. Die Datenstruktur der in diesem Datenfeld aufgenommenen Daten kann gleich gewählt sein mit der Datenstruktur der Schnittstelle zwischen einem Betriebssystembus und Modulen des Kommunkationssystems, insbesondere der zwischen einem Betriebs- und Datenserver und dem Durchschaltemodul. Das Datenfeld des Interkommunikations-Datensegments hat also Schnittstellencharakter und dient vorwiegend dem Austausch von Meldungen und Aufträgen mit dem Informationstransportsystem des Realtime-Betriebssytems.

In diesem Zusammenhang ist als weiteres wichtiges Strukturmerkmal anzusehen, daß allen Programmsubsystemen, die sowohl vom Realtime-Betriebssystem als auch vom Timesharing-Betriebssystem erreichbar, d. h. adressierbar sein sollen, zwei Identifikationsadressen zugewiesen werden. Damit sind aus einem unter dem Timesharing-Betriebssystem ablaufenden Prozeß heraus Meldungen an alle Programmsubsysteme des Kommunkationssystems möglich. Im Realtime-Betriebssystem wird das Datenfeld des Interkommunikations-Datensegmentes wie die Systembusschnittstelle (Dualport RAM eines Interface-Processors) von einem Takt-Programmsubsystem (Clock Task) bedient. Das Timesharing-Betriebssystem nutzt das Datenfeld des Interkommunikations-Datensegments wie einen Interface-Prozessor, d. h., daß aus einer Warteschlange (command queue) Aufträge empfangen und in eine Warteschlange (event queue) Aufträge abgesetzt werden.

Das Realtime-Betriebssystem und das Timesharing-Betriebssystem haben jeweils einen eigenen Tabellenspeicher zur Speicherung von Deskriptoren.

Damit jeweils ein Übergang zwischen beiden Betriebssystemen möglich ist, werden bestimmte Deskriptoren in beiden Tabellenspeichern (Global Descriptor Table) identisch ausgbildet; dies gilt besonders für die Codesegmentdeskriptoren von Prozeduren, die solch einen Übergang ausführen.

Vorteilhafte Ausgestaltungen der Erfindung ergeben sich aus den Unteransprüchen und werden teilweise nachfolgend kommentiert.

Einen für die Belange der Praxis wesentlichen weiteren Integrationsschritt erzielt eine vorteilhafte Weiterbildung der Erfindung dadurch, daß das Applikationsmodul wie die Durchschalte einheit und gegebenenfalls weitere Funktionsmodule, insbesondere eine Betriebs- Datenservereinheit, über einen gemeinsamen Systembus Zugriff auf zentrale betriebs- und/oder sicherheitstechnische Einrichtungen haben. Damit ist eine weitgehende Integration des Applikationsmoduls in die betriebstechnischen Leistungen des Kommunikationssystems möglich. Durch eine derartige Integration können beispielsweise folgende betriebstechnische Leistungsmerkmale für das Applikationsmodul bzw. das Timesharing-Betriebssystem verfügbar gemacht werden:
1. Automatischer Wiederanlauf
2. Programm-Einbringung über ein Lademedium eines Systemmoduls, beispielsweise eines Datenservers
3. Konfigurierung von dem Applikationsmodul zugeordneten externen Speichern (hard disk) über ein betriebstechnisches Terminal, das vorzugsweise an einen Betriebs- und Datenserver angeschlossen ist.
4. Konfigurierung der vermittlungstechnischen Peripherie des Applikationsmoduls über das betriebstechnische Terminal
5. Signalisierung von Hardware-Fehlern über dem Durchschaltemodul zugeordnete Anzeigeeinrichtungen oder ein betriebstechnisches Terminal, das vorzugsweise an den Betriebs- und Datenserver angeschlossen ist.

Die weitgehende Integration in die sicherheitstechnischen Leistungen des Kommunikationssytems macht es möglich, für das Applikationsmodul beispielsweise folgende sicherheitstechnischen Leistungsmerkmale verfügbar zu machen:
1. Software-Fehlerüberwachung mit Hilfe eines watch-dog-Prozesses
2. Hardware-Fehlererkennung und Fehlereingrenzung für dem Applikationsmodul zugeordnete externe Festwertspeicher
3. Möglichkeit der Parallelaufzeichnung auf Festwertspeichern
4. Routinetest der gesamten Hardware des Applikationsmoduls
5. Überwachung des Applikationsmoduls durch ein zentrales Systemsicherheitstechnik-Programmodul
Bezüglich des Überganges vom Realtime-Betriebssystem in das Timesharing-Betriebssystem wird gemäß einer weiteren Ausgestaltung der Erfindung erreicht, daß diesem Übergang im Vergleich zu den Prioritäten der anderen Programmsubsysteme eine niedrige Priorität eingeräumt wird. Dadurch wird sichergestellt, daß zeitkritische Funktionen des Realtime-Betriebssystems gegenüber sämtlichen Funktionen des Timesharing-Betriebssystems vorrangig bearbeitet werden. Eine bevorzugte Möglichkeit der Einräumung einer bestimmten Priorität besteht darin, daß der Übergang vom Realtime-Betriebssytem in das Timesharing-Betriebssytem aus einem Leerlauf-Programmsubsystem (idle task) erfolgt.

Es kann dazu notwendig sein, daß die im Realtime-Betriebssytem eingerichtete idle task zu modifizieren ist. Diese Modifizierung dient hauptsächlich der Realisierung folgender Operationen:
1. Zuordnungswechsel der Systemprozessoreinrichtung vom Systemtabellenspeicher auf den Modultabellenspeicher des Applikationsmoduls.
2. Prozeßwechsel (Task Switch) auf ein Task-Statussegment des Applikationsmoduls.
3. Im Applikationsmodul führt der Prozeßwechsel auf eine Interruptübergangsroutine, da das Applikationsmodul in Richtung auf das Realtime-Betriebssytem über einen, diese Interruptübergangsroutine aktivierenden Interrupt (Anreiz) verlassen worden ist. In dieser Interruptübergangsroutine steht hinter der Unterbrechungsstelle - Task Switch vom Realtime-Betriebssystem - ein Aufruf eine 'Anreizermittlung', in der die für das Applikationsmodul gespeicherten Anreize abgearbeitet werden.

Der Übergang vom Timesharing-Betriebssytem in das Realtime-Betriebssytem wird bevorzugt durch einen periodischen Interrupt-Prozeß eingeleitet, während dessen das Auslesen der im Datenfeld des Interkommunikations-Datensegmentes vorgegeben Daten in die jeweiligen programmsubsystemindividuellen Eingabe-und Ausgabespeicher erfolgt. Damit werden die vom Timesharing-Betriebssystem abgegebenen Meldungen den betreffenden Programmsubsystemen des Realtime-Betriebssystems zugeteilt und können bei Aktivierung der jeweiligen Programmsubsysteme unmittelbar in die Verarbeitung einbezogen werden.

Bezüglich weiterer Eingenschaften und der Bedeutung der Merkmale der Erfindung sowie der vorteilhaften Weiterbildungen desselben gemäß den Unteransprüchen wird ausdrücklich auf die nachfolgenden Erläuterung eines Ausführungsbeispiels der Erfindung verwiesen.

Dieses Ausführungsbeispiel ist in 12 Figuren dargestellt.
Dabei zeigen:
FIG 1 in schematischer Blockdarstellung einen ISDN-Kommunikationscomputer in Zusammenhang mit Peripheriegeräten,
FIG 2 ein Blockschaltbild mit den wesentlichen Funktionskomponenten der Durchschalteeinheit und der Betriebs-Datenservereinheit,
FIG 3 ein Blockschaltbild mit den wesentlichen Funktionskomponenten der Steuerung der Betriebs-Datenservereinheit,
FIG 4 ein Schalenmodell eine bestehenden Softwarearchitektur der Betriebs-Datenservereinheit,
FIG 5 eine Prinzipskizze des Übergangs von einem zum anderen Betriebssystem mit den wesentlichen Übergangsstadien und diesen zugeordneten Markierungen VI bis VIII,
FIG 6 eine schematische Darstellung der relevanten Deskriptoren in den Tabellenspeichern und der relevanten Segmente in dem Systemspeicher sowie mit den zum Zeitpunkt VI nach FIG 5 relevanten Verweisen,
FIG 7 eine Darstellung nach FIG 6 mit den zum Zeitpunkt VII nach FIG 5 relevanten Verweisen,
FIG 8 eine Darstellung nach FIG 6 mit den zum Zeitpunkt VII nach FIG 5 relevanten Verweisen,
FIG 9 eine schematische Darstellung der für eine Unterbrechungsbearbeitung relevanten Deskriptoren sowie den bei aktivem Realtime-Betriebssystem und eine diesem Betriebssystem zugehörigen Unterbrechungsanforderung relevanten Verweisen,
FIG 10 eine Darstellung nach FIG 9 mit den bei aktivem Realtime-Betriebssytem und einem dem Teilnehmerbetriebssytem zugehörigen Unterbrechungsanforderung relevanten Verweisen,
FIG 11 eine Darstellung nach FIG 9 mit den bei aktivem Teilnehmerbetriebssystem und einer dem Realtime-Betriebssystem zugehörigen Unterbrechungsanforderung relevanten Veweisen,
FIG 12 eine Darstellung nach FIG 9 mit den bei aktivem Teilnehmerbetriebssystem und einer diesem Betriebssystem zugehörigen Unterbrechungsanforderung relevanten Verweisen.

Im Ausführungsbeispiel wird von einem bekannten und bereits ausführlich beschriebenen - in der Beschriebungseinleitung genannte Literatur - Kommunikationssytem ausgegangen, mit dem Durchschalte- wie auch spezielle Speichervermittlungsfunktionen in einem Konzept zusammengefaßt sind.

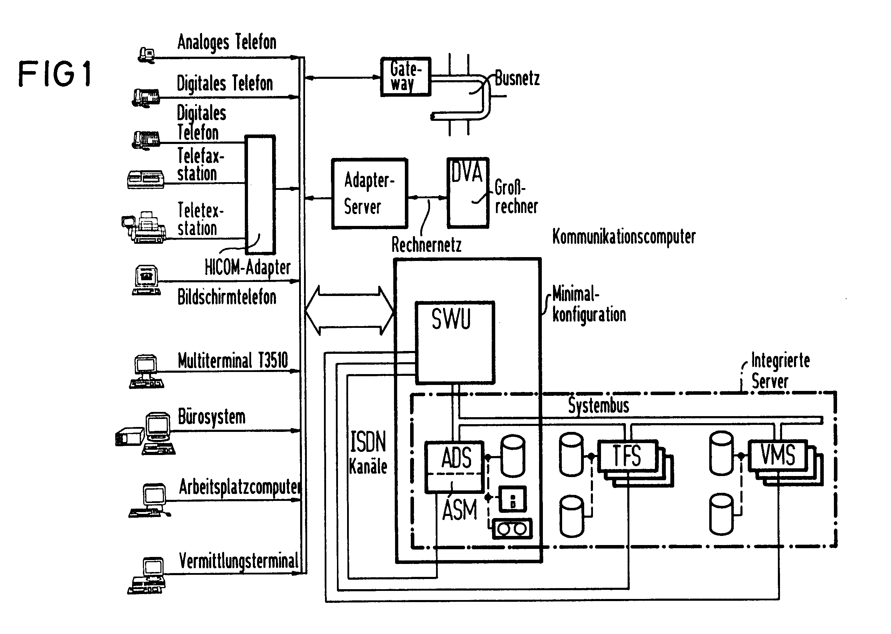

In der FIG 1 ist ein Kommunikationscomputer zusammen mit einer Vielzahl von anschließbaren Geräten schematisch dargestellt. Wesentliche Bestandteile des Kommunkationscomputers sind eine Durchschalteeinheit SWU und eine Betriebs-Datenservereinheit ADS. Diese beiden Einheiten sind ergänzt durch eine Sprachinformationsservereinheit VMS und eine Text-Faxservereinheit TFS. Zusätzlich ist der Betriebs-Datenservereinheit ADS ein Applikationsmodul ASM zugeordnet, das mit einem Teilnehmerbetriebssystem versehen ist.

Die Einheiten SWU, ADS, VMS, TFS und ASM sind prinzipiell als reine Softwaremodule aufzufassen, d.h., daß die gewählte Darstellung nicht an eine bestimmte Art und Verteilung der verwendeten Hardware gebunden ist. Insbesondere kann der Durchschalteeinheit SWU, der Betriebs-Datenservereinheit ADS und dem Applikationsmodul ASM dieselbe Prozessoreinrichtung zugeordnet sein.

In einer Minimalkonfiguration setzt sich dieser Kommunkationscomputer funktional nur aus einer Durchschalteeinheit SWU für die Durchschaltevermittlungsfunktionen und einer Betriebs-Datenservereinheit ADS für die Speichervermittlungsfunktionen zusammen. In einer geläufigen Ausbaustufe des Kommunikationscomputers, die den folgenden Ausführungen zugrundeliegt, wird beiden Einheiten eine eigene Hardware zugeordnet, die jeweils für sich die Merkmale eines Mikrocomputersystems aufweisen.

Beide Systemeinheiten sind im Sinne eines Zusammenwirkens u.a. über einen Systembus miteinander verbunden.

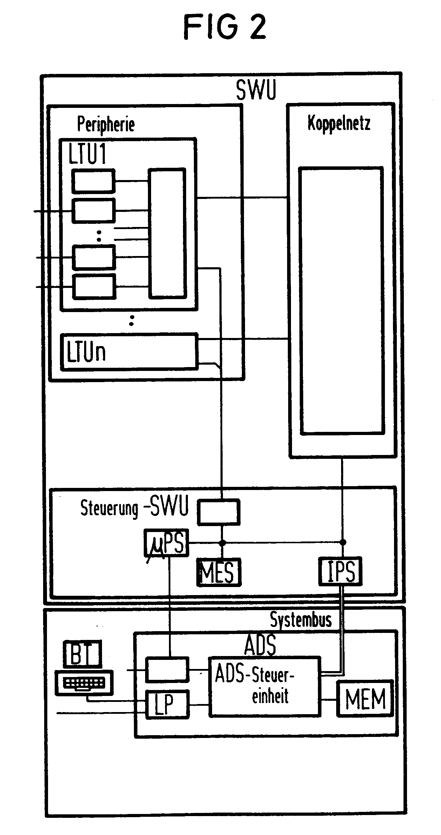

In der FIG 2 ist ein Blockschaltbild des Kommunikationscomputers in Minimalkonfiguration mit Durchschalteeinheit SWU und Betriebs-Datenservereinheit ADS dargestellt. Wie ersichtlich, setzt die Durchschalteeinheit SWU aus drei Funktionseinheiten zusammen, nämlich aus einer Peripherie-Treibereinheit mit mehreren Anschlußeinheiten LTU bis LTUn, einen Koppelnetz und einer Steuerung-SWU.

Als einzelne Komponenten der Steuerung-SWU sind ein Mikroprozessor »PS, eine Speichereinheit MES sowie ein Interface-Prozessor IPS angedeutet.

Die Betriebs-Datenservereinheit ADS besteht im wesentlichen aus einer ADS-Steuereinheit, einem Datenspeicher MEM und aus Leitungsperipherie LP. Zusätzlich kann an die Betriebs-Datenservereinheit auch ein Betriebsterminal BT angeschlossen sein.

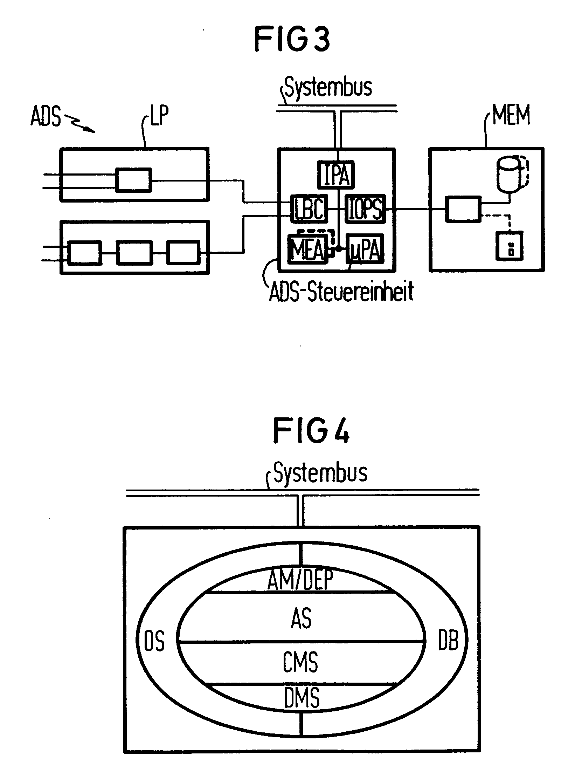

In FIG 3 sind in einem Blockschaltbild die wesentlichen Elemente der ADS-Steuereinheit dargestellt. Diese sind im einzelnen die zentral Recheneinheit »PA, ein Systemspeicher MEA, eine Leitungsbussteuerung LBC für die Leitungsperipherie LP, ein Ausgabeprozessor IOPS für den Datenspeicher MEM und ein Schnittstellenprozessor IPA für den Systembus.

Als Basis für eine programmtechnische Realisierung der Funktionen in der Durchschalteeinheit SWU und der Betriebs-Datenservereinheit ADS weisen beide Systemeinheiten ein eigenes Betriebssystem auf. Beide Betriebssysteme sind jedoch über den Systembus miteinander gekoppelt. Da im allgemeinen kurze Reaktionszeiten erforderlich sind, müssen beide Betriebssysteme als Echtzeitbetriebssysteme ausgebildet sein.

Gegenüber der Durchschalteeinheit SWU, die im wesentlich lediglich Informationswege verknüpft, und die im folgenden eine untergeordnete Rolle spielt, stellt die Betriebs-Datenservereinheit ADS eine zusätzlich mit der Organisation und Steuerung des gesamten Kommunikationssytems betraute Systemeinheit dar.

Die dazu in der Betriebs-Datenservereinheit ADS implementierten Funktionen lassen sich in einen systembetriebstechnischen Funktionskomplex und in verschiedene optionale Datenanwendungsfunktionen unterteilen. Zu den systembetriebstechnischen Funktionen zählen z.B. das Inbetriebsetzen der Anlagen, das Laden von Systemprogrammen, das Verteilen und Starten dieser Systemprogramme, das Aktivieren bzw. Deaktivieren von Systemfunktionen, sowie das Erfassen aller betrieblichen Veränderungen.

In den Bereich der Datenanwendungsfunktionen fallen im wesentlichen Datentransportfunktionen für einen Transport verschiedenartiger Daten, wie Gebührendaten, System-Anwenderdateien zwischen dem Kommunkationssystem und anderen Datenbearbeitungssystemen, ebenso wie Datenerfassungsfunktionen, z.B. für eine Gebührenermittlung oder für verkehrsstatistische Daten und Datenbearbeitungsfunktionen, z.B. für eine Aufbereitung von ermittelten Daten.

Für die Ausführung von Funktionen werden mehrere Programme bereitgehalten, die bei Bedarf der zentralen Recheneinheit »PA in der Betriebs-Datenservereinheit ADS zur Abarbeitung zugeführt werden.

Da in der Regel mehrere Funktionen gleichzeitig zur Ausführung anstehen können, sorgt ein allen Programmen übergeordnetes Programm, nämlich das bereits erwähnte Betriebssystem, für eine Verwaltung der zentralen Recheneinheit »PA.

Das in der Betriebs-Datenservereinheit ADS installierte Betriebssystem ist für Teilhaberbetrieb und Echtzeitverarbeitung ausgelegt, so wie z.B. das bekannte Betriebssystem iRMX286.

In FIG 4 ist anhand eines Schalenmodells die Softwarearchitektur in der ADS-Steuereinheit veranschaulicht. Unter der Verwaltung des Betriebssystems OS befindet sich ein betriebstechnischer und sicherungstechnischer Softwarekomplex AM/DEP, ein Anwendersystem AS, das die eigentliche Speichervermittlungsfunktion durchführt, ein Kommunikationssteuersystem CMS für die Ausführung genormter Kommunikationsprotokolle und ein Dateiverwaltungssystem DMS. Eine gemeinsame Datenbasis DB ist allen diesen Systemen zugänglich.

Im Gegensatz zu Betriebssystemen, die für Teilnehmerbetrieb ausgelegt sind, arbeiten beim Teilhaberbetrieb definitionsgemäß einzelne Benutzergruppen einer Anlage an einer Lösung von Aufgaben desselben Aufgabengebietes. Dabei werden lediglich Daten und Steueranweisungen über eventuelle Steuergeräte eingegeben, während die bearbeitenden Programme bereits in der Rechenanlage gespeichert sind. Mit einem Teilnehmerbetriebssystem, auch Timesharing-Betriebssystem genannt, können dagegen von einzelnen Terminals aus voneinander unabhängige Aufgaben bearbeitet werden. Jeder Benutzer verfügt über ein eigenes Ein-Ausgabegerät als Verbindungsglied zur Rechenanlage. Von diesem Gerät aus gibt er sowohl seine Programme, als auch seine Daten- und Steueranweisungen ein.

Legt man die an ein Kommunikationssystem gestellten Aufgaben zugrunde, die bekanntlich in einer Durchschalte- und Speichervermittlung liegen, so wird angesichts eines einheitlichen Ausgabengebietes deutlich, weshalb in dem Kommunikationssystem ein Betriebssystem für Teilhaberbetrieb eingesetzt ist.

Diese Tatsache stellt den Grund dafür dar, daß die in einem Kommunikationssystem vorhandene Rechenleistung bisher nur für die vermittlungstechnischen Aufgaben zur Verfügung stand, obwohl diese die gebotene Rechenleistung häufig nicht in vollem Umfang in Anspruch nahmen.

Um den Benutzern eines Kommunikationssystems die Möglichkeit zur individuellen Erstellung und Bearbeitung von Daten auf einer Rechenanlage zu geben, war es bisher unumgänglich, den Benutzern entweder eigene intelligente Rechner in der Art von Personalcomputern zur Verfügung zu stellen, oder aber einfachere Datenstationen über das Kommunikationssystem mit einer zentralen selbständigen Datenverarbeitungsanlage, die natürlich im Teilnehmerbetrieb arbeitet, zu verbinden.

Bei dem erfindungsgemäßen Kommunikationssystem sind die Funktionen einer solchen Datenverarbeitungsanlage in dem bestehenden Kommunikationssystem softwaremäßig integriert. Bei unveränderter Hardware erfüllt das Kommunikationssystem dann zusätzlich zu den vermittlungstechnischen Aufgaben noch diejenigen einer Datenverarbeitungsanlage im Teilnehmerbetrieb.

Die damit verbundene, zusätzlich erforderliche Rechenleistung kann nur von der Betriebs-Datenservereinheit ADS erbracht werden, da die Durchschalteeinheit SWU einen eigenständigen und in sich abgeschlossenen Funktionskomplex bildet. Um zusätzlich einen Teilnehmerbetrieb zu ermöglichen, wird das die zentrale Recheneinheit der Betriebsdatenservereinheit ADS verwaltende Teilhaberbetriebssystem so geändert, daß es einerseits noch die vermittlungstechnischen Funktionen in Zusammenhang mit der Durchschalteeinheit SWU gewährleistet und andererseits den gewünschten Teilnehmerbetrieb zuläßt. Da beide Betriebsweisen prinzipiell voneinander unabhängig sind, und im Interesse der Benutzer für den Teilnehmerbetrieb ein hochkomfortables und zudem bekanntes Betriebssystem von Vorteil ist, werden die Funktionen des bestehenden (Teilhaberbetriebssystem) Echtzeitbetriebssystem z.B. iRMX durch die eines eigenständigen Teilnehmerbetriebssystem (Timesharing-Betriebssystem, z.B. UNIX oder ein Variante von UNIX) ergänzt.

Obwohl beide Betriebssysteme von ihrem Konzept her für eine alleinige Verwaltung einer zentralen Recheneinheit vorgesehen sind, ist es mit einem speziellen Mikroprozessor, z.B. INTEL 80286 bzw. 80386, als zentrale Recheneinheit PA möglich, die Betriebssysteme ohne bedeutende Änderungen programmtechnisch zu koppeln, so daß beiden Betriebssystemen die Rechenleistung der zentralen Recheneinheit uPA zugänglich ist.

Bei dieser programmtechnischen Kopplung wird die zentrale Recheneinheit »PA in zeitlicher Abfolge nacheinander jeweils dem einen oder dem anderen Betriebssystem zugeteilt. Bekanntlich erfolgt auch innerhalb von sogenannten Multitasking-Betriebssystemen, wie z.B. iRMX, auch eine Zuteilung der zentralen Recheneinheit und zwar jeweils auf Programmuntereinheiten, die auch als Programmsubsysteme oder häufig Tasks oder Prozesse bezeichnet werden.

Solche Tasks stellen aus Programmcode und Daten bestehende Softwareeinheiten dar, die mit einer spezifischen Funktion betraut sind und einen strukturierten Aufbau eines Betriebssystems ermöglichen.

Jeder Task in einem Betriebssystem ist in der Regel ein sogenannter Prioritätswert zugeordnet, der die Wichtigkeit einer jeweiligen Task zum Ausdruck bringt und im Wettbewerb mit anderen Tasks für die Zuteilung der zentralen Recheneinheit entscheidend ist.

In einem für Echtzeitbearbeitung vorgesehenen Betriebssystem (z.B. iRMX), sind Tasks für zeitkritische Anwendungen mit entsprechend hohen Prioritätswerten versehen, um bei Bedarf eine möglichst sofortige Zuteilung der zentralen Recheneinheit zu erlangen.

Derjenige Teil des Betriebssystems, der die Zuteilung der Tasks koordiniert und der eine Ablaufreihenfolge der Tasks entsprechend ihren Prioritätswerten festlegt, wird Task scheduler genannt.

Wird einer Task die zentrale Recheneinheit vom Task scheduler zugeteilt, kann die betreffende Task die zentrale Recheneinheit solange behalten, bis sich entweder eine höherpriorisierte Task um Zuteilung der zentralen Recheneinheit bewirbt, oder bis sie von sich aus die zentrale Recheneinheit abgibt. Letzteres trifft vor allem auch dann zu, wenn eine Task zur Bearbeitung ihrer Aufgaben gewisse, von anderen Tasks zu erbringende Informationen benötigt und auf das Eintreffen dieser Informationen warten muß.

Jede Task eines Betriebssystems befindet sich somit zu einem beliebigen Zeitpunkt in genau einem von im wesentlichen drei Betriebszuständen, die als "laufend", "bereit" und "schlafend" bezeichnet werden. Laufend ist demnach diejenige Task, der im Moment die zentral Recheneinheit zugeteilt ist. Bereit sind alle Tasks, die sich um Zuteilung der zentralen Recheneinheit bewerben, und schlafend sind die Tasks, die auf das Eintreffen bestimmter Ereignisse warten.

Im Multi-tasking-Betriebssystem wird in der Regel noch eine zusätzliche sogenannte Ideltask vorgesehen, der keine spezifische Funktion zukommt, die jedoch nie schlafend ist und da sie den niedrigsten Prioritätswert aufweist, nur dann laufend ist, wenn alle andern Tasks schlafend sind.

Gemäß einer vorteilhaften Weiterbildung der vorliegenden Erfindung ist die im Echtzeit-Betriebssystem des Kommunikationssystem vorhandene Idletask so abgeändert, daß sie im Zustand "laufend" die zentrale Recheneinheit »PA eigenmächtig, d.h. ohne Betriebssystemkontrolle an das Teilnehmerbetriebssystem abgibt. Die Idletask bildet somit eine Art Schleuse, mit deren Hilfe die zentrale Recheneinheit »PA dem Echtzeitbetriebssystem entzogen und natürlich auch wieder zurückgegeben werden kann.

Aus der Sicht der beiden Betriebssyteme ist diese Schleuse nicht vorhanden, weshalb jedes der Betriebssysteme eine für sich ausschließliche Verfügungsgewalt über die zentrale Recheneinheit »PA annimmt.

Eine Übergabe der zentralen Recheneinheit muß also in einer für die beiden Betriebssyteme unsichtbaren und unmittelbar mit der zentralen Recheneinheit zusammenwirkenden Befehlsebene und Datenebene stattfinden. Bei Verwendung eines Mikroprozessors des Typs 80286/80386 als zentrale Recheneinheit »PA verringern sich die für eine Realisierung einer solchen Übergabe erforderlichen Maßnahmen erheblich, da die Hardwarearchitektur dieses Mikroprozessors bereits für dessen Verwendung in Multitasking-Betriebssystemen spezialisiert ist.

So ist in diesem Mikroprozessor zur Bildung physikalischer Adressen ein mehrstufiges und tabellenorientiertes Adressierungsverfahren realisiert. Das Grundprinzip dieses Verfahrens liegt darin, im Adreßbereich des Arbeitsspeichers funktional zusammenhängende Speicherblöcke, im folgenden Segmente genannt, über Deskriptoren zu adressieren und eine eindeutige Zuordnung dieser Segmente zu einzelnen Programmpaketen, wie z.B. Tasks, hardwaremäßig zu unterstützen.

Für die Adressierung der Segmente ist im Arbeitsspeicher des Mikroprozessors eine Tabelle angelegt, die als Global-Deskriptor-Tabelle GDT bezeichnet wird. Diese Tabelle GDT weist eine Vielzahl von sogenannten Deskriptoren auf. Die Desriptoren stellen im wesentlichen einen absoluten Adreß- und Längenwert dar, mit dem die Anfangsadresse und die Länge eines Speicherblockes im Adreßbereich des Mikroprozessors eindeutig festgelegt ist. Innerhalb der GDT kommt jedem der Deskriptoren eindeutig eine jeweilige Platznummer zu.

Je nach Verwendung werden Deskriptoren unterschiedlich bezeichnet. So sind Datensegmentdeskriptoren vorgesehen, die Speicherblöcke festlegen, in denen nur Daten stehen oder Codesegmentdeskriptoren für Speicherblöcke, in denen nur Programmcode hinterlegt ist.

Es gibt aber auch sogenannte Systemsegmentdeksriptoren, die Anfangsadresse und Länge von Speicherblöcken festlegen, die wiederum als Tabelle, ähnlich der GDT aufgebaut sind.

Unter den Systemsegmentdeskriptoren wird zwischen Local-deskriptor-Tabellen-Deskriptoren LDTD und (Task-) Statussegment-Deskriptoren TSSD unterschieden. Ein Local-deskriptor-Tabellen-Deskriptoren LDTD legt einen Speicherblock fest, der Local-deskriptor-Tabelle LDT genannt wird. Eine Local-deskriptor-Tabelle LDT beinhaltet wiederum Deskriptoren, die in ihrem Aufbau denen der GDT entsprechen, allerdings sind in einer LDT keine Systemsegmentdeskriptoren möglich.

Ein (Task-) Statussegment-Deskriptor TSSD legt ein sogenanntes (Task-) Statussegment TSS fest, das ebenfalls als Tabelle aufgebaut ist, hauptsächlich aber zur Abspeicherung für mikroprozessorinterne Registerinhalte reserviert ist. In jedem (Task-) Statussegment TSS ist zudem ein Zeiger, auch LDT-Selektor genannt, vorhanden, über den eines der von der GDT festgelegten LDT's dem betreffenden TSS zugeordnet wird. Der LDT-Selektor stellt diejenige Platznummer dar, die derjenige Local-deskriptor-Tabellen-Deskriptor in der GDT besitzt, der die zugeordnete LDT festlegt.

Der Mikroprozessor selbst stellt intern eine Vielzahl von Hardwareregistern zur Verfügung, die bei Vorgabe einer relativen Adresse eine dynamische Zuordnung der relativen Adresse zu einem Segment ermöglichen, so daß eine absolute Adresse gebildet werden kann, über die dann eine Speicherzelle im Adreßbereich des Mikroprozessors ausgewählt wird.

Zu jedem Befehl, den der Mikroprozessor zur Ausführung vorfindet, wird nach einer gegebenen Vorschrift eindeutig eines von mehreren sogenannten Segmentregistern ausgewählt. In den Segmentregistern steht entweder eine Platznummer einer GDT oder eine Platznummer einer LDT.

Da aus der Sicht des Mikroprozessors nur eine GDT vorhanden ist, deren absolute Anfangsadresse und Länge in einem mikroprozessorinternen sogenannten Global-deskriptor-Tabellen-Register GDTR eingestellt werden kann, ist mit einer Platznummer in der GDT sofort ein zugehöriger Deskriptor in der GDT ausgewählt. Da keine Platznummer für Systemsegmentdeskriptoren vergeben werden, gibt der über die Platznummer ausgewählte Deskriptor als Segmentdeskriptor die Anfangsadresse und Länge desjenigen Segmentes an, in dem eine eventuell mit dem zugrundeliegenden Befehl verbundene relative Adresse anzusprechen ist.

Ist in einem ausgewählten Segmentregister eine Platznummer einer LDT angegeben, muß zuerst festgestellt werden, in welcher der LDT's die Platznummer einen Segmentdeskriptor auswählen soll.

Wie eingangs schon erwähnt, ist der Mikroprozessor 80286/80386 als zentrale Recheneinheit in Verbindung mit Multi-tasking-Betriebssystemen gut geeignet. Eine Verteilung der gemeinsamen Aufgaben des Betriebssystems auf verschiedene Softwarepakete, sogenannte Tasks, von denen zu jedem beliebigen Zeitpunkt nur genau eine laufend ist, kann durch den Mikroprozessor auf die Weise unterstützt werden, daß jeder Task ein eigenes (Task-) Statussegment TSS zugeordnet wird, in dem taskindividuelle Informationen und ein Bezug auf zur betreffenden Task gehörige Daten- und Codesegmente hinterlegt sind.

Da stets nur das zur momentan laufenden Task gehörige (Task-) Statussegment TSS vom Mikroprozessor benötigt wird, und die zu den jeweiligen andern Tasks gehörigen (Task-) Statussegmente TSS ohne Belang sind, ist im Mikroprozessor hardwaremäßig ein sogenanntes Taskregister TS vorgesehen, in dem die Platznummer in der GDT steht, die derjenige (Task-) Statussegment-Deskriptor TSSD hat, der zur momentan laufenden Task gehört.

Mit der Auswahl eines (Task-) Statussegementes TSS als aktuelles (Task-) Statussegment wird mittels des im betreffenden (Task-) Statussegment hinterlegten LDT Selektors eine aktuelle LDT ausgewählt. Der LDT Selektor stellt diejenige Platznummer in der GDT dar, die dem, die aktuelle LDT festlegenden Local-deskriptor-Tabellen-Deskriptor LDTD gehört.

Die aktuelle LTD wird vom Mikroprozessor bei Auswahl eines aktuellen (Task-) Statussegmentes über ein internes Local-Deskriptor-Tabellen-Register LDTR festgelegt, in dem der dem aktuellen (Task-) Statussegment entnommene LDT Selektor eingetragen wird.

Wird also in einem Segmentregister eine Platznummer in einer LDT angegeben, so ist stets die aktuelle LDT gemeint, in der dann analog zur GDT die betreffende Platznummer einen Segmentdeskriptor bezeichnet.

Für einen Taskwechsel, d.h. eine bisher bereite Task soll laufend und die bisher laufende Task soll bereit oder schlafend werden, ist in dem Mikroprozessor eine hardwaremäßige Taskumschaltung, auch Task switch oder Prozeßwechsel genannt, vorgesehen. Bei dieser Taskumschaltung werden durch interne Prozessorsteuerung die zu bisher laufenden Task gehörenden Daten in dem der Task zugehörigen (Task-) Statussegment abgespeichert und durch die zur nunmehr laufenden Task gehörenden Daten ersetzt. Das Task Register TR und das Local-deskriptor-Tabellen-Register LDTR wird auf das aktuelle (Task-) Statussegment bzw. auf die aktuelle LDT eingestellt.

Zur sofortigen Bearbeitung von Software- und Hardwareereignissen wird dem Mikroprozessor eine im Speicherbereich hinterlegte weitere Tabelle, eine sogenannte Interrupt-deskriptor-Tabelle IDT zur Verfügung gestellt. In der IDT sind Verweise auf sämtliche, beim Auftreten eines Ereignisses (auch interrupt, Anreiz oder Unterbrechungsanforderung genannt) in Frage kommenden Interrupt-Routinen (auch interrupt handler genannt) in Form jeweils einer Platznummer in der GDT bzw. einer LDT und einer Relativeadresse hinterlegt. Unter der betreffenden Platznummer in der GDT bzw. einer LDT befindet sich ein Codesegmentdeskriptor, der die Adresse für ein, eine jeweilige Interrupt-Routine beinhaltendes Codesegment darstellt. Die zugehörige Relativadresse ist die Anfangsadresse der Interruptroutine innerhalb dieses Codesegmentes.

Beim Auftreten eines Ereignisses wird eine, das betreffende Ereignis identifizierende Kennummer als Platzummer in der IDT benutzt, um über die GDT bzw. eine LDT die dem Ereignis zugehörige Interruptroutine auszuwählen.

Zur Festlegung der IDT im Adreßbereich des Mikroprozessors wird in einem mikroprozessorinternem Register im sogenannten Interrupt-deskriptor-Tabellen-Register IDTR die absolute Anfangsadresse und die Länge der IDT eingestellt.

Mit Unterstützung solcher über Tabellen gesteuerten Adressierungsmechanismen wird die Idletask des Echtzeitbetriebssystems in der Betriebs-Datenservereinheit ADS des Kommunikationssystems als Schleusensubsystem ausgebildet, um die zentrale Recheneinheit uPA dem Teilnehmer- und dem Echtzeitbetriebssystem zur Verfügung stellen zu können.

Voraussetzung dafür ist, daß die wesentlichen Teile beider Betriebssysteme, also der Betriebssystemprogramme samt zugehöriger Daten im Systemspeicher MEA der zentralen Recheneinheit »PA hinterlegt sind. Da beide Betriebssyteme voneinander unabhängige Programmstrukturen aufweisen und prinzipiell eigenständig sind, hat jedes der Betriebssyteme eigene Adressierungstabellen in Form von jeweils genau einer GDT und IDT, sowie eventuell mehrere (Task-) Statussegmente und Local-deskriptor-Tabellen LDT.

Zur besseren Unterscheidung wird die dem Echtzeitbetriebssytem zugeordnete GDT auch als Systemtabellenspeicher und die IDT als weiterer Systemtabellenspeicher bezeichnet; die dem Teilnehmerbetriebssytem zugeordnete GDT wird Modultabellenspeicher und die IDT weiterer Modultabellenspeicher genannt.

Um ein Verständnis der zur Erfindung führenden programmtechnischen Maßnahmen nicht unnötig zu erschweren, wird im folgenden von einem vereinfachten Konzept ausgegangen, bei dem die Anzahl der (Task-)Statussegmente beider Betriebssysteme auf jeweils genau ein (Task-)Statussegment TSS beschränkt ist, weshalb beide Betriebssysteme aus der Sicht des Mikroprozessors als jeweils eine Task behandelt werden können. Eine Task-Umschaltung innerhalb der einzelnen Betriebssysteme wird also ohne die taskspezifische Unterstützung der 80286/80386 Mikroprozessorhardware vorgenommen.

In dem Systemtabellenspeicher (=GDT des Echtzeitbetriebssystem), wie auch in dem Modultabellenspeicher (=GDT des Teilnehmerbetriebssystems) sind neben einer Vielzahl von betriebssystemindividuellen Deskriptoren auch gemeinsame Deskriptoren sogenannte Kommunikationsdeskriptoren vorhanden, die jeweils in identischer Form in beiden GDT's vertreten sind. Diese gemeinsamen Deskriptoren sind in den GDT's unter gleichen Platznummern hinterlegt. Als gemeinsame Deskriptoren sind zunächst ein Datensegment-, ein Statussegment- und wenigstens ein Codesegment-Deskriptor von Interesse.

Die beiden gemeinsamen Datensegmentdeskriptoren legen genau ein Datensegment fest, das im folgenden Interkommunikations-Datensegment genannt wird, weil es von beiden Betriebssystemen erreichbar ist und zur Datenübergabe benützt werden kann.

Die beiden gemeinsamen Codesegmentdeskriptoren legen ein Codesegment fest, in dem Programmsequenzen gespeichert sind, die bei einem Übergang von einem zum anderen Betriebssystem abgearbeitet werden. Dieses Codesegment wird im wesentlichen von der Idletask des Echtzeitbetriebssystems benützt, da der Übergang ins Teilnehmerbetriebssystem bei laufender Idletask erfolgt.

Die beiden gemeinsamen Statussegmentdeskriptoren legen das zum Echtzeitbetriebssystem gehörige (Task-) Statussegment fest. Die Platznummer der gemeinsamen Statussegmentdeskriptoren wird zusammen mit den Anfangsadressen und Längen beider GDT's und IDT's vom Echtzeitbetriebssystem aus im Interkommunikationsdatensegment hinterlegt. Außerdem wird im Interkommunikations-Datensegment die Platznummer in dem Modultabellenspeicher eingetragen, an der sich der Statussegmentdeskriptor des Teilnehmerbetriebssystems befindet.

Da für ein Inbetriebsetzen des gesamten Kommunikationssystems die zentrale Recheneinheit »PA dem Echtzeitbetriebssystem zur Verfügung stehen muß, wird davon ausgegangen, daß vor einem ersten Übergang ins Teilnehmerbetriebssystem sämtliche mikroprozessorinternen Register den Anforderungen des Echtzeitbetriebssystems entsprechend eingestellt sind.

In dem zur Idletask des Echtzeitbetriebssystems gehörenden und von gemeinsamen Codedeskriptoren festgelegten Codesegment sind spezielle Anweisungen an die zentrale Recheneinheit »PA enthalten, die bei laufender Idletask ausgeführt werden und den Übergang zum Teilnehmerbetriebssystem vorbereiten.

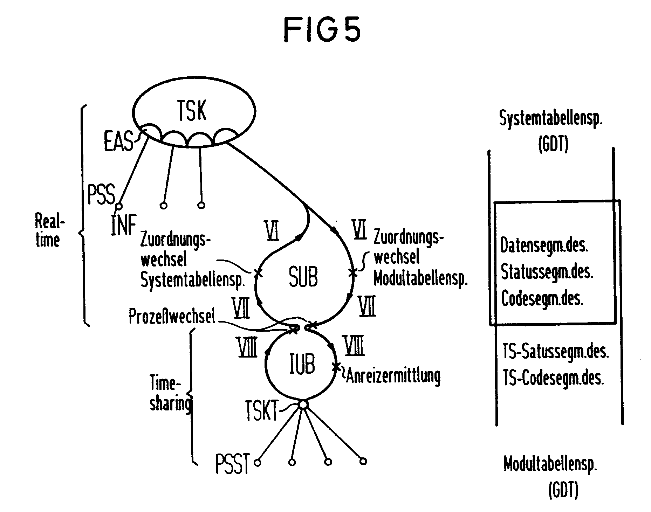

In der FIG 5 sind anhand einer Prinzipskizze die für einen Übergang von einem zum andern Betriebssystem relevanten programmtechnischen Schritte im Zusammenhang mit den beiden Betriebssystem dargestellt. Im oberen Teil der Skizze ist grob vereinfacht die Struktur des Echtzeitbetriebssystems mit dem Task-Scheduler TSK und einer Vielzahl von an diesen angebundenen Programmsubsystemen PSS veranschaulicht. Innerhalb des Task-Schedulers TSK sind programmsubsystemindividuelle Eingabe-und Ausgabespeicher EAS angedeutet, die innerhalb des Betriebssystems für Meldungen an die jeweiligen Programmsubsysteme PSS vorgesehen sind. Eines der dargestellten Programmsubsysteme PSS ist als betriebssystemimmanentes Informationstransportsystem INF ausgebildet. Ein weiteres Programmsubsystem stellt die zum Schleusensubsystem SUB ausgebildete Idle-Task dar, die in Form einer Schleife symbolisch dargestellt ist. Im unteren Teil der FIG 5 ist ebenso stark vereinfacht die Struktur des Teilnehmerbetriebssystems mit Task-Scheduler TSKT und an diesen angebundenen Programmsubsystem PSST dargestellt. Ebenfalls in Form einer Schleife ist eine zur Kopplung mit dem Schleusensubsystem SUB dienende Interruptübergangsroutine IUB des Teilnehmerbetriebssystems veranschaulicht.

Die wichtigsten Schritte bei einem Übergang von einem zum andern Betriebssystem sind durch die Ziffern VI bis VIII markiert. Zur Veranschaulichung der bei den einzelnen Schritten des Übergangs jeweils relevanten Deskriptoren im Systemtabellen- und Modultabellenspeicher, sind diese am rechten Rand der FIG 5 zusammen mit den wesentlichen Deskriptoren schematisch dargestellt.

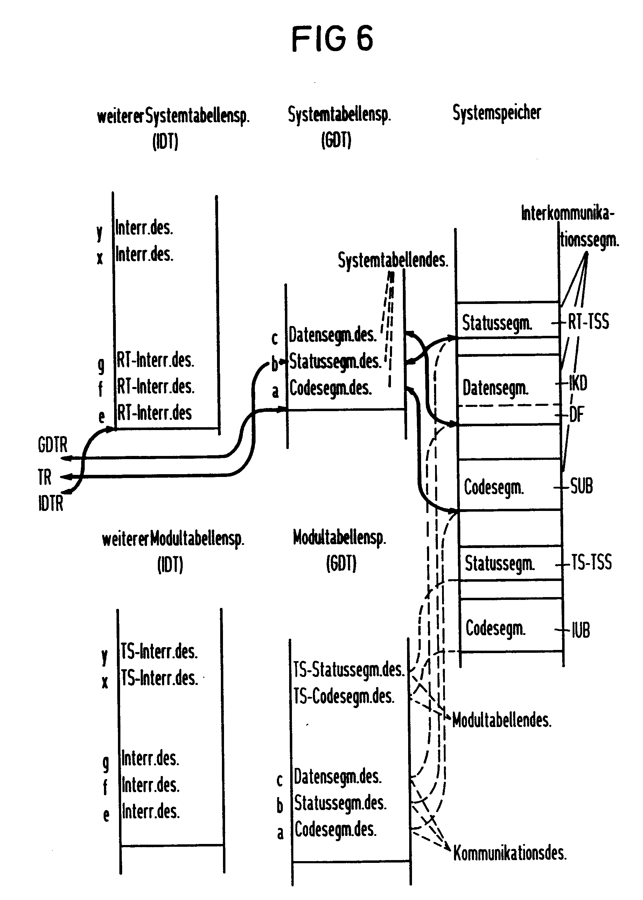

In der FIG 6 bis 8 sind schematisch jeweils die Deskriptoren in den System- bzw. Modultabellenspeichern und die zugeordneten Speichersegmenten im Systemspeicher dargestellt. Die eingezeichneten Verweispfeile stellen die bei den in FIG 5 markierten Schritten VI bis VIII jeweils geltenden Deskriptorbezüge dar.

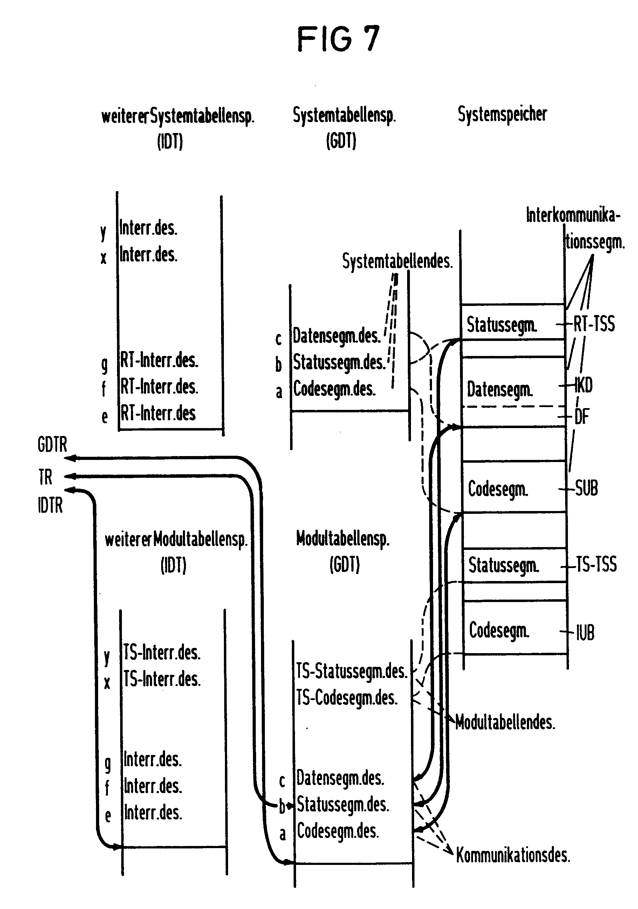

Als erstes veranlaßt das Programm des Schleußensubsystems SUB, sobald dieses laufend ist, (es gelten die in FIG 6 dargestellten Deskriptor-Bezüge), daß das mikroprozessorinterne Interrupt-deskriptor-Tabellenregister IDTR und das Global-deskriptor-Tabellenregister GDTR mit den im Interkommunikations-Datensegment IKD hinterlegten Anfangsadressen des Modultabellenspeichers und des weiteren Modultabellenspeichers (= GDT und IDT des Teilnehmerbetriebssystems) überschrieben werden. Es gelten dann die in FIG 7 dargestellten Deskriptorbezüge.

Da im Modultabellenspeicher gemeinsame Deskriptoren für das Codesegment der Idletask SUB, für das Interkommunikations-Datensegment IKD und für das Statussegment RT-TSS des Echtzeitbetriebssystems vorhanden sind, bezieht die zentrale Recheneinheit »PA weiterhin ihre Anweisungen aus dem Codesegment der Idletask.

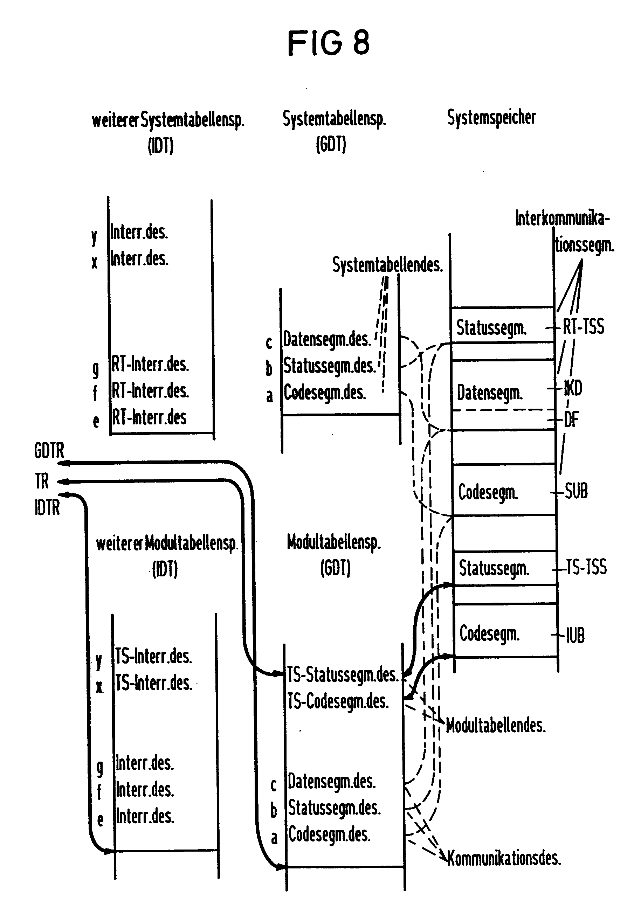

Im weiteren veranlaßt das Programm der Idletask eine Taskumschaltung (Prozeßwechsel) auf den TS-Statussegmentdeskriptor des Teilnehmerbetriebssystems, dessen Platznummer (im Modultabellenspeicher) im Interkommunikations-Datensegment IKD hinterlegt ist. Bei dieser Taskumschaltung, die mit einem Mikroprozessorsprungbefehl ausgelöst wird, werden vom Mikroprozessor automatisch die zur Task des Echtzeitbetriebssystems gehörenden Mikroprozessorregisterinhalte, z.B. Segmentregister, Befehlszähler, nicht aber IDTR und GDTR in das Statussegment RT-TSS des Echtzeitbetriebssystems eingetragen und durch die entsprechenden Werte aus den zum Teilnehmerbetriebssystem gehörigen Statussegment TS-TSS ersetzt. Im Task Register TR wird die PLatznummer des zum Teilnehmerbetriebssytem gehörigen TS-Statussegmentdeskriptors eingetragen. Es gelten die in FIG 8 dargestellten Deskriptorbezüge.

Nach dieser Taskumschaltung bezieht die zentrale Recheneinheit »PA ihre Anweisungen aus einem, dem Teilnehmerbetriebssystem zugehörigen Codesegment, da auch die Segmentregister bei der Taskumschaltung neu geladen wurden.

Dieses Codesegment gehört im eigentlichen Sinne zum task scheduler TSKT des Teilnehmerbetriebssystems und beinhaltet im wesentlichen die Interruptübergangsroutine IUB, auf die im folgenden noch detaillierter eingegangen wird.

In beiden Betriebssystemen werden interne Taskwechsel beim Auftreten von Ereignissen durchgeführt, die den Taskschedulern in Form von Hard- bzw. Softwareinterrupts mitgeteilt werden. Die Taskscheduler weisen zur Behandlung unterschiedlicher Interruptquellen sogenannte Interruptroutinen auf, die anhand der beim Auftreten eines Interrupts mitgegebenen und den Interrupt identifizierenden Kennummer x, y, e, f, g ausgewählt werden. Obwohl beide Betriebssyteme durch Hardwareereignisse gewissermaßen gesteuert werden, muß das Echtzeitbetriebssystem im Sinne einer Echtzeitverarbeitung beim Auftreten eines Ereignisses sofort reagieren können.

Deshalb wird, vorausgesetzt die zentrale Recheneinheit uPA ist momentan gerade dem Teilnehmerbetriebssytem zugeteilt, beim Auftreten eines, das Echtzeitbetriebssystem betreffenden Interrupts, die Interruptübergangsroutine IUB des Teilnehmerbetriebssystems ausgewählt, die sofort einen Übergang der zentralen Recheneinheit »PA zurück zur Idletask SUB des Echtzeitbetriebssystems einleitet.

Diese Interruptübergangsroutine IUB veranlaßt nach Abspeichern der den betreffenden Interrupt identifizierenden Kennummer im Interkommunikations-Datensegment IKD einen Prozeßwechsel auf den Statussegmentdeskriptor des Echtzeitbetriebssystems. Die Platznummer dieses Statussegmentdeskriptors (in den GDT's) ist im Interkommunikations-Datensegment IKD hinterlegt. Es gelten wieder die in FIG 7 dargestellten Deskriptorbezüge.

Nach diesem Prozeßwechsel, der ebenfalls durch einen Sprungbefehl des Mikroprozessors ausgelöst wird, bezieht die zentrale Recheneinheit »PA ihre Anweisungen wieder aus dem Codesegment der als Schleusensubsystem SUB ausgebildeten Idletask und zwar von der Stelle, die dem Prozeßwechsel zum Teilnehmerbetriebssystem folgt.

An dieser Stelle wird dann veranlaßt, daß die Registerinhalte des GDTR, IDTR wieder auf die im Interkommunikations-Datensegment IKD hinterlegten, zum Echtzeitsbetriebssytem gehörigen Werte eingestellt werden. (Es gelten wieder die in FIG 6 dargestellten Deskriptorbezüge). Danach wird die unmittelbar vorher von der Interruptübergangsroutine IUB des Teilnehmerbetriebssytems im Interkommunikations-Datensegment IKD hinterlegte Kennummer ausgelesen und nach einer eventuellen Umcodierung dem Task scheduler TSK des Echtzeitbetriebssytems in Zusammenhang mit eventuellen Softwareinterrupts mitgeteilt.

Die Idletask wird in der Regel daraufhin vom task scheduler in den Zustand "bereit" versetzt werden.

Bei aktivem Echzeitbetriebssystem können natürlich auch das Teilnehmerbetriebssystem betreffende Interrupts (=Anreize) auftreten, die dann allerdings nicht sofort bearbeitet werden können, deren Auftreten aber für eine durch das Teilnehmerbetriebssytem zu erfolgende Auswertung registriert werden muß.

Um beim Auftreten eines Interrupts sofort dessen Betriebssystemzugehörigkeit feststellen zu können, sind die den Interrupts des einen Betriebssystems mitgegebenen Kennnummern x, y, e, f, g zu denen der Interrupt des anderen Betriebssystems verschieden.

Da die Kennummern die Interrupts als Platznummern in einer IDT verwendet werden um das Ansprungsziel einer einem jeweiligen Interrupt zugeordneten Interruptroutine zu ermitteln, und jedes der Betriebssysteme eine eigene IDT besitzt, sind in den IDT's beider Betriebssyteme Platznummern für betriebssytemeigene, wie auch Platznummern für betriebssystemfremde Interrupts vorgesehen.

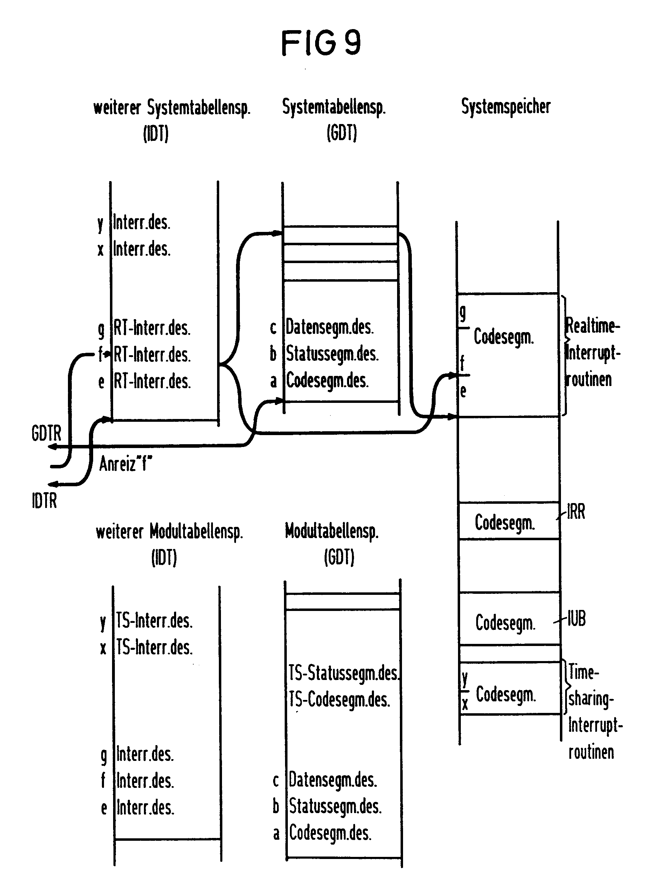

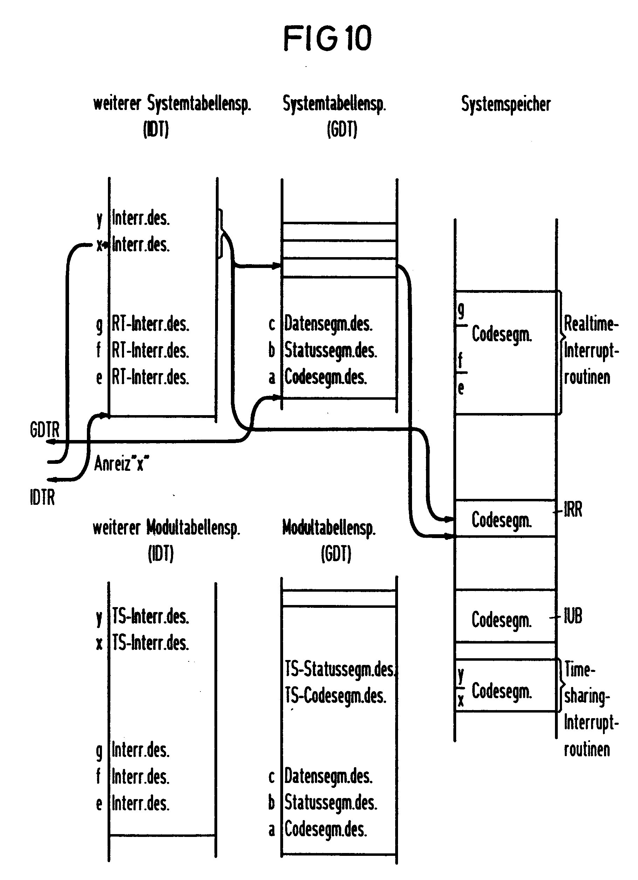

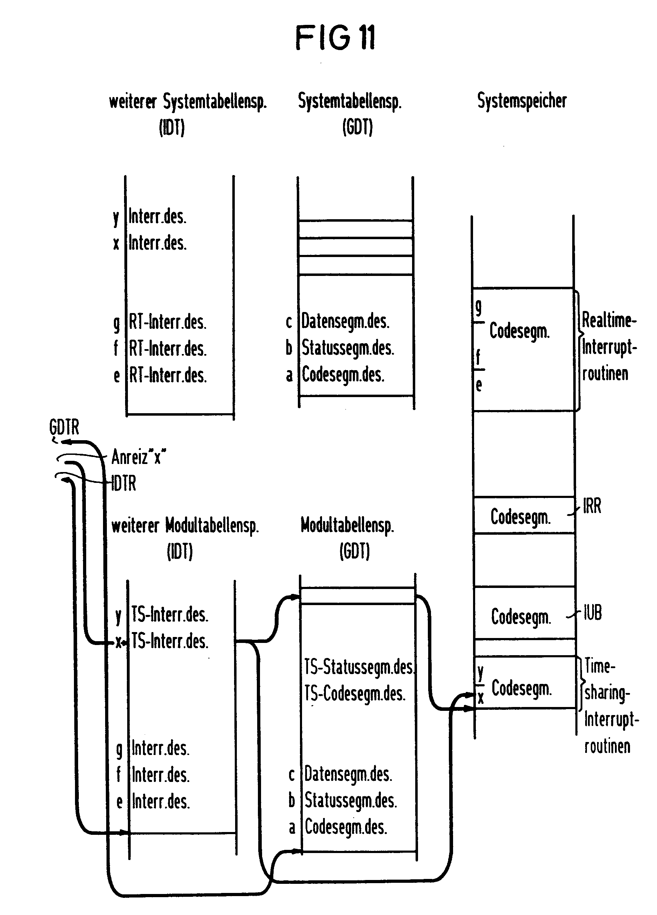

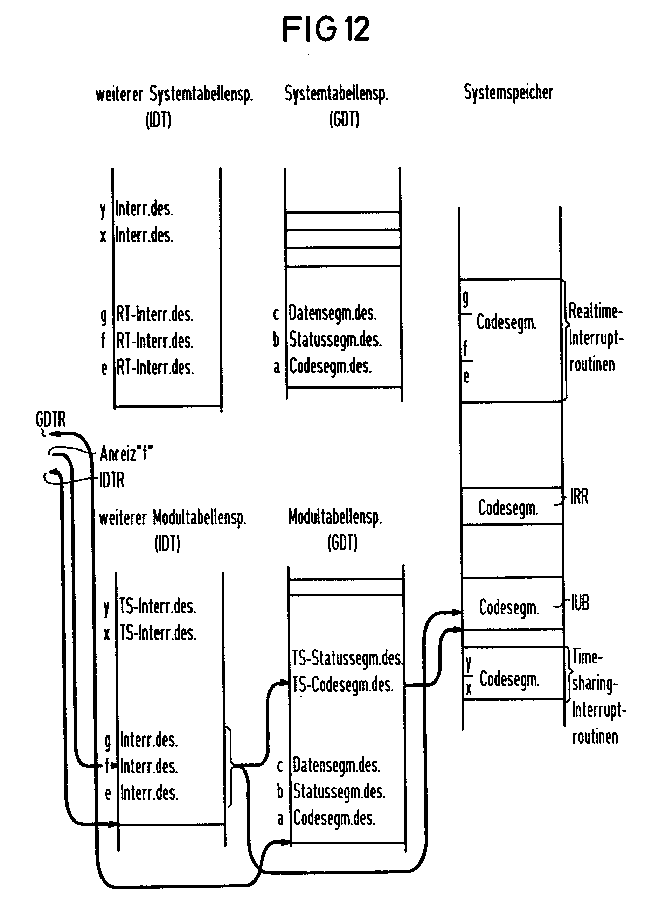

In den FIG 9 bis 12 sind jeweils schematisch Auszüge aus den System- bzw. Modultabellenspeichern mit den darin für eine Unterbrechungsbearbeitung relevanten Deskriptoren sowie deren Bezüge auf die verschiedenen Interruptroutinen dargestellt. Für systemeigene Interrupts gelten bei aktivem Echtzeitbetriebssystem die in FIG 9 und bei aktivem Teilnehmerbetriebssytem die in FIG 11 dargestellten Dekriptorbezüge. Für systemfremde Interrupts gelten bei aktivem Echzeitbetriebssytem die in FIG 10 und bei aktivem Teilnehmerbetriebssytem die in FIG 12 dargestellten Deskriptorbezüge.

Unter den Platznummern der betriebssystemeigenen Interrupts sind die in beiden IDT's Verweise auf die betriebssytemindividuellen Interruptroutinen hinterlegt. Unter den Platznummern der betriebssytemfremden Interrupts sind in der IDT des Echtzeitbetriebssytems (= weiterer Systemtabellenspeicher) jedoch Verweise auf eine gemeinsame Interruptrettungsroutine IRR hinterlegt, die bei aktivem Echtzeitbetriebssystem auf einen, das Teilnehmerbetriebssytem betreffenden Interrupt x, y hin (die in FIG 10 dargestellten Deskriptorbezüge gelten) lediglich die diesem Interrupt zugeordnete Kennummer x, y in das Interkommunikations-Datensegment IKD einträgt.

In der IDT des Teilnehmerbetriebssytems (= weiterer Mudultabellenspeicher) sind unter den betriebssytemfremden Platznummern e, f, g Verweise auf die Interruptübergangsroutine IUB hinterlegt. Diese Interruptübergangsroutine IUB wurde bereits schon erwähnt, sie bewirkt nämlich mit einer ersten Programmsequenz die Übergabe der zentralen Recheneinheit »PA an die zum Schleusensubsystem SUB ausgebildete Idletask des Echtzeitbetriebssytems.

Eine sich an diese erste Programmsequenz anschließende zweite Programmsequenz wird von der zentralen Recheneinheit »PA unmittelbar nach einer Taskumschaltung zum TS-Statussegementdeskriptor des Teilnehmerbetriebssystems abgearbeitet. Diese zweite Programmsequenz wird auch Anreizermittlung genannt, da sie für eine Auswertung der im Interkommunikations-Datensegment IKD von der Interruptrettungsroutine IRR des Echtzeitbetriebssytems eingetragenen Kennummern der das Teilnehmerbetriebssytem betreffenden Interrupts x, y zuständig ist.

Obwohl beide Betriebssyteme dieselbe zentrale Recheneinheit uPA verwalten, sind sie voneinander unabhängig funktionsfähig und ihr jeweiliger Funktionsumfang bleibt von der Existenz des anderen Betriebssystems unbeeinträchtigt - der Funktionsumfang wird sogar erweitert.

Die erfindungsgemäße Einbindung eines Teilnehmerbetriebssystems in ein bestehendes Kommunikationssystem mit (Echtzeit)-Teilhaberbetriebssytem ermöglicht nämlich auch betriebssytemübergreifende Funktionen.

Zur Realisierung solcher Funktionen ist im Interkommunikations-Datensegment IKD ein als sogenannter dual port Speicher ausgebildetes Datenfeld DF eingerichtet, über das gewissermaßen eine Kommunikation zwischen den Tasks des einen Betriebssystems und den Tasks des andern Betriebssystems möglich ist.

Jede laufende Task kann in dieses Datenfeld Aufträge und Meldungen für eine Task des anderen Betriebssystems hinterlegen. Unmittelbar nach einem Übergang ins jeweilige andere Betriebssystem wird dieses Datenfeld DF vom Task scheduler TSK, TSKT des betreffenden Betriebssystem ausgelesen, und etwaige vorgefunden Aufträge werden behandelt, als kämen sie von betriebssysteminterner Seite, indem sie in den einer betreffenden Task zugehörigen programmsubsystemindividuellen Eingabe- und Ausgabespeicher EAS eingetragen werden.

Mit Aufträgen an die für Transportfunktionen zuständige Task (= betriebssystemimmanentes Informationstransportsystem INF) des Echtzeitbetriebssytems lassen sich auf diese Weise Dateien beliebigen Inhalts, also Programm- wie Datendateien aus der Verfügungsgewalt des einen Betriebssystems in die des andern Betriebssystems überführen.

Zur Übergabe der Dateien ist ein externes Speichermedium, z.B. eine Harddisk des Datenspeichers MEM geeignet, auf die von beiden Betriebssytemen aus zugegriffen werden kann.

## Patentansprüche

1. Modular strukturiertes ISDN-Kommunikationssystem
- mit wenigstens einer Durchschalteeinheit (SWU)
-- an die über Peripheriemodule Geräte und Netze anschließbar sind und
-- die ein Koppelnetz aufweist,
- mit einer speicherprogrammierten Systemprozessoreinrichtung (»PA)
-- die ein Realtime-Betriebssytem aufweist,
--- zur Steuerung
---- des Zugangs zu den Systemresourcen,
---- der Kommunikations zwischen Programmsubsystemen (PSS; "tasken") und
---- der Reaktion auf Anreize ("interrupt handling"),
--- mit einem betriebssystemimmanenten Informationstransportsystem (INF),
---- mit mailboxartig betriebenen programmsubsystemindividuellen Eingabe- und Ausgabespeichern (EAS) für Meldungen zu und von Programmsubsystemen (PSS),
- mit einem Systemspeicher (MEA),
-- mit über Deskriptoren adressierbaren Speichersegmenten zur Speicherung,
--- von Dateien und
--- der Programmsubsysteme,
- mit einem Systemtabellenspeicher, der auf die Speichersegmente des Realtime-Betriebssystems bezogene Systemtabellendeskriptoren enthält,
**gekennzeichnet durch,**
- ein Applikationsmodul (ASM),
-- mit einem Timesharing-Betriebssystem,
-- mit einem als Schleußensubsystem (SUB) ausgebildeten Programmsubsystem (PSS),
-- mit einem alternativ zum Systemtabellenspeicher auswählbaren Modultabellenspeicher, der
--- auf Speichersegmente des Timesharing-Betriebssystems bezogene Modultabellendeskriptoren enthält, unter denen sich wenigstens ein
---- auf ein Systemprozessordaten zwischenspeicherndes Statussegment (TS-TSS) des Timesharing-Betriebssytems bezogener Timesharing(TS-)-Statussegmentdeskriptor und ein
---- auf das Codesegment einer Interruptübergangsroutine (IUB) des Timesharing-Betriebssystems bezogener Timesharing(TS-)-Codesegmentdeskriptor befinden,
--- und der ferner auf Interkommunikations-Segmente des Realtime-Betriebssystems bezogene Kommunikationsdeskriptoren enthält, die zu den im Systemtabellenspeicher enthaltenen und auf die Interkommunikations-Segmente bezogenen Systemtabellendeskriptoren identisch interpretierbar sind und unter denen sich wenigstens
---- ein Codesegmentdeskriptor für den Zugriff auf das Codesegment des Schleusensubsystems (SUB),
---- ein Statussegmentdeskriptor für den Zugriff auf ein dem Schleusensubsystem (SUB) zugeordnetes Statussegment (RT-TSS) im Realtime-Betriebssystem und
---- ein Datensegmentdeskriptor für den Zugriff auf ein Interkommunikations-Datensegment (IKD) befindet, wobei das Interkommunikations-Datensegment (IKD)
----- die von jedem der beiden Betriebssysteme bei einem Übergang zum jeweiligen anderen Betriebssytem benötigten Eingangsinformationen zwischenspeichert und ferner
----- ein Datenfeld (DF) zur Aufnahme von mit Programmsubsystemen (PSS, PSST) des jeweilig anderen Betriebssystems austauschbaren Meldungen enthält.

2. Modular strukturiertes ISDN-Kommunikationssystem nach Anspruch 1, **dadurch gekennzeichnet,**
- daß derart Steueranweisungen im Schleusensubsystem (SUB) vorgesehen sind, daß
-- bei Aktivierung des Schleusensubsystems (SUB) im Realtime-Betriebssytem ein Zuordnungswechsel der Systemprozessoreinrichtung (»PA) von dem Systemtabellenspeicher auf den Modultabellenspeicher stattfindet und anschließend unter Aufruf des TS-Statussegmentdeskriptors ein Prozeßwechsel in die Interruptübergangsroutine (IUB) erfolgt, die daraufhin beendet wird,
- daß derart Steueranweisungen in der Interruptübergangsroutine (IUB) vorgesehen sind,
-- daß bei Aktivierung des Interruptübergangsroutine (IUB) im Timesharing-Betriebssytem unter Aufruf des Kommunikations-Statussegmentdeskriptors ein Prozeßwechsel in das Schleusensubsystem (SUB) erfolgt, und
- daß derart weitere Steueranweisungen im Schleusensubsystem (SUB) vorgesehen sind,
-- daß ein Zuordnungswechsel der Systemprozessoreinrichtung (»PA) vom Modultabellenspeicher zum Systemtabellenspeicher stattfindet, bevor das Schleusensubsystem (SUB) im Realtime-Betriebssystem deaktiviert wird.

3. Modular strukturiertes ISDN-Kommunikationssystem nach einem der Ansprüche 1 bis 2, **dadurch gekennzeichnet,** daß das Applikationsmodul (ASM) wie die Durchschalteeinheit (SWU) und gegebenenfalls weitere Funktionsmodule, insbesondere eine Betriebs-Datenservereinheit (ADS), über einen gemeinsamen Systembus Zugriff auf zentrale betriebs-und/oder sicherheitstechnische Einrichtungen haben.

4. Modular strukturiertes ISDN-Kommunikationssystem nach einem der vorhergehenden Ansprüche, **dadurch gekennzeichnet,** daß neben einem weiteren Systemtabellenspeicher, der für das Realtime-Betriebssytem betreffende Anreize (e, f, g) Realtime(RT-)-Interrupt-Deskriptoren enthält, die sich auf dem Realtime-Betriebssytem zugehörige Interruptroutinen beziehen, ein alternativ auswählbarer weiterer Modultabellenspeicher vorgesehen ist, der für das Timesharing-Betriebssystem betreffende Anreize (x, y) Timesharing(TS-)-Interrupt-Deskriptoren enthält, die sich auf dem Timesharing-Betriebssystem zugehörige Interruptroutinen beziehen,
daß der weitere Modultabellenspeicher für die das Realtime-Betriebssytem betreffenden Anreize (e, f, g) Interruptdeskriptoren enthält, die sich auf die Interruptübergangsroutine (IUB) beziehen,
und daß der weitere Systemtabellenspeicher für die das Timesharing-Betriebssytem betreffenden Anreize (x, y) Interruptdeskriptoren enthält, die sich auf eine Interrupt-Rettungsroutine (IRR) im Realtime-Betriebssytem beziehen.

5. Modular strukturiertes ISDN-Kommunikationssystem nach Anspruch 4, **dadurch gekennzeichnet,** daß die Interrupt-Rettungsroutine (IRR), die das Timesharing-Betriebssystem betreffenden Anreize (x, y) im Interkommunikations-Datensegment (IKD) abspeichert.

6. Modular strukturiertes ISDN-Kommunikationssystem nach einem der Ansprüche 4 bis 5, **dadurch gekennzeichnet,** daß in der Interruptübergangsroutine (IUB) die von der Interrupt-Rettungsroutine (IRR) im Interkommunikations-Datensegment (IKD) gespeicherten Anreize (x, y) ermittelt werden.

7. Modular strukturiertes ISDN-Kommunikationssystem nach einem der vorhergehenden Ansprüche, **dadurch gekennzeichnet,** daß im Schleusensubsystem (SUB) derart Steueranweisungen vorgesehen sind, daß bei jedem Zuordnungswechsel zwischen Modul- und Systemtabellenspeicher auch ein Zuordnungswechsel zwischen dem jeweiligen weiteren Modul- bzw. Systemtabellenspeicher erfolgt.

8. Modular strukturiertes ISDN-Kommunikationssystem nach einem der vorhergehenden Ansprüche, **dadurch gekennzeichnet,** daß dem als Schleusensubsystem (SUB) ausgebildeten Programmsubsystem im Realtime-Betriebssytem eine vergleichsweise niedrige Priorität eingeräumt ist.

9. Modular strukturiertes ISDN-Kommunikationssystem nach einem der vorhergehenden Ansprüche, **dadurch gekennzeichnet,** daß ein Leerlaufprogrammsubsystem (Idletask) des Realtime-Betriebssytems als Schleusensubsystem (SUB) ausgebildet ist.

10. Modular strukturiertes ISDN-Kommunikationssystem nach einem der vorhergehenden Ansprüche, **dadurch gekennzeichnet,** daß das Datenfeld (DF) zwischen dem Informationstransportsystem (INF) und dem Timesharing-Betriebssystem austauschbare Meldungen enthält.

11. Modular strukturiertes ISDN-Kommunikationssystem nach einem der vorhergehenden Ansprüche, **dadurch gekennzeichnet,** daß ein Übergang vom Timesharing-Betriebssystem in das Realtime-Betriebssytem jeweils durch einen periodischen, das Realtime-Betriebssystem betreffenden Anreiz eingeleitet wird, der zum Auslesen der im Datenfeld (DF) hinterlegten Meldungen in die jeweiligen programmsubsystemindividuellen Eingabe- und Ausgabespeicher (EAS) führt.

12. Modular strukturiertes ISDN-Kommunikationssystem nach einem der vorhergehenden Ansprüche, **dadurch gekennzeichnet,** daß im Zuge einer prioritätsgerechten sukzessiven Aktivierung aller Programmsubsysteme (PSS, PSST), die jeweils vom Datenfeld (DF) in die entsprechenden Eingabe- und Ausgabespeicher (EAS) übernommenen Daten von den Programmsubsystemen (PSS, PSST) verarbeitet werden.

13. Modular strukturiertes ISDN-Kommunikationssystem nach einem der vorhergehenden Ansprüche, **dadurch gekennzeichnet,** daß das Datenfeld (DF) als Dual-Port-Speicher für Meldungen der Programmsubsysteme (PSS) des Realtimebetriebssystems einerseits und der Programmsubsysteme (PSST) des Timesharing-Betriebssystems andererseits ausgebildet ist.

## Claims

1. Modularly structured ISDN communication system
- having at least one switching unit (SWU)
- to which devices and networks can be connected via peripheral modules and
- which exhibits a switching network,
- comprising a Program controllet system processor device (»PA)
- which exhibits a real-time operating system,
- for controlling
- the access to the system resources,
- the communication between program subsystems (PSS; tasks) and
- the response to events (interrupt handling),
- comprising an operating system-inherent information transport system (INF),
- with program-subsystem-individual input and output buffers (EAS), operated like a mailbox, for messages to and from program subsystems (PSS),
- having a system memory (MEA),
- with memory segments, which can be addressed via descriptors, for storing
- files and
- the program subsystems,
- with a system table memory which contains system table descriptors related to the memory segments of the real-time operating system,
characterized by
- an application module (ASM),
- with a timesharing operating system,
- with a program subsystem (PSS) designed as gateway subsystem (SUB),
- with a module table memory which can be selected as an alternative to the system table memory and which
- contains module table descriptors related to memory segments of the timesharing operating system, which include at least one
- timesharing (TS) status segment descriptor related to a status segment (TS-TSS) of the timesharing operating system which temporarily stores system processor data and one
- timesharing (TS) code segment descriptor related to the code segment of an interrupt transition routine (IUB) of the timesharing operating system,
- and which also contains communication descriptors related to intercommunication segments of the real-time operating system, which can be interpreted identically to the system table descriptors contained in the system table memory and related to the intercommunication segments and which include at least
- one code segment descriptor for the access to the code segment of the gateway subsystem (SUB),
- one status segment descriptor for the access to a status segment (RT-TSS) allocated to the gateway subsystem (SUB) in the real-time operating system and
- one data segment descriptor for the access to an intercommunication data segment (IKD) temporarily storing
- the input information items needed by each of the two operating systems during a transition to the other operating system in each case and also containing
- a data field (DF) for receiving messages which can be exchanged with program subsystems (PSS, PSST) of the other operating system in each case.

2. Modularly structured ISDN communication system according to Claim 1, characterized
- in that control instructions are provided in the gateway subsystem (SUB) in such a manner that
- when the gateway subsystem (SUB) is activated, an allocation switch of the system processor device (»PA) from the system table memory to the module table memory occurs in the real-time operating system and then a task switch to the interrupt transition routine (IUB) occurs with call-up of the TS status segment descriptor, which switch is then ended,
- in that control instructions are provided in the interrupt transition routine (IUB) in such a manner that
- when the interrupt transition routine (IUB) is activated, a task switch to the gateway subsystem (SUB) occurs in the timesharing operating system with call-up of the communication status segment descriptor, and
- in that further control instructions are provided in the gateway subsystem (SUB) in such a manner that
- an allocation switch of the system processor device (»PA) from the module table memory to the system table memory occurs before the gateway subsystem (SUB) is deactivated in the real-time operating system.

3. Modularly structured ISDN communication system according to one of Claims 1 to 2, characterized in that the application module (ASM) and the switching unit (SWU) and possibly other function modules, particularly an administration data server unit (ADS), have access to central administration and/or dependability system facilities via a common system bus.

4. Modularly structured ISDN communication system according to one of the preceding claims, characterized in that, apart from a further system table memory which contains for events (e, f, g) relating to the real-time operating system real time (RT) interrupt descriptors which relate to interrupt routines belonging to the real-time operating system, a further module table memory is provided which can be selected as an alternative and which contains for events (x, y) relating to the timesharing operating system timesharing (TS) interrupt descriptors which relate to interrupt routines belonging to the timesharing operating system, in that the further module table memory contains for the events (e, f, g) relating to the real-time operating system interrupt descriptors which relate to the interrupt transition routine (IUB), and in that the further system table memory contains for the events (x, y) relating to the timesharing operating system interrupt descriptors which relate to an interrupt rescue routine (IRR) in the real-time operating system.

5. Modularly structured ISDN communication system according to Claim 4, characterized in that the interrupt rescue routine (IRR) stores the events (x, y) relating to the timesharing operating system in the intercommunication data segment (IKD).

6. Modularly structured ISDN communication system according to one of Claims 4 to 5, characterized in that the events (x, y) stored in the intercommunication data segment (IKD) by the interrupt rescue routine (IRR) are determined in the interrupt transition routine (IUB).

7. Modularly structured ISDN communication system according to one of the preceding claims, characterized in that control instructions are provided in the gateway subsystem (SUB) in such a manner that with each allocation switch between module and system table memory, an allocation switch also occurs between the respective other module and system table memory.

8. Modularly structured ISDN communication system according to one of the preceding claims, characterized in that a comparatively low priority is allocated to the program subsystem designed as gateway subsystem (SUB) in the real-time operating system.

9. Modularly structured ISDN communication system according to one of the preceding claims, characterized in that an idle program subsystem (idletask) of the real-time operating system is designed as gateway subsystem (SUB).

10. Modularly structured ISDN communication system according to one of the preceding claims, characterized in that the data field (DF) between the information transport system (INF) and the timesharing operating system contains exchangeable messages.

11. Modularly structured ISDN communication system according to one of the preceding claims, characterized in that a transition from the timesharing operating system to the real-time operating system is in each case initiated by a periodic event relating to the real-time operating system which leads to the reading-out of the messages stored in the data field (DF) into the respective program-subsystem-individual input and output buffers (EAS).

12. Modularly structured ISDN communication system according to one of the preceding claims, characterized in that during a prioritized progressive activation of all program subsystems (PSS, PSST) the data in each case transferred from the data field (DF) into the corresponding input and output buffers (EAS) are processed by the program subsystems (PSS, PSST).

13. Modularly structured ISDN communication system according to one of the preceding claims, characterized in that the data field (DF) is designed as dual-port memory for messages of the program subsystems (PSS) of the real-time operating system, on the one hand, and of the program subsystems (PSST) of the timesharing operating system, on the other hand.

## Revendications

1. Système de communication ISDN à structure modulaire comportant
- au moins une unité d'interconnexion (SWU)
-- à laquelle les appareils et réseaux peuvent être raccordés par l'intermédiaire de modules périphériques, et
-- qui possède un réseau de couplage,
- un dispositif à processeur du système (»PA) programmé au moyen d'une mémoire,
-- qui possède un système de fonctionnement en temps réel
--- pour la commande
---- de l'accès aux ressources du système,
---- de la communication entre des sous-systèmes de programme (PSS; "tasken") et
---- de la réaction à des incitations ("interrupt handling"),
--- un système de transport d'informations (9) propre au système de fonctionnement,
---- comportant des mémoires d'entrée et de sortie (EAS) fonctionnant à la manière d'une boîte aux lettres et prévues individuellement dans les sous-systèmes de programme, pour des signalisations en direction et en provenance de sous-systèmes de programme (PSS),
- une mémoire (MEA) du système,
-- comportant des segments de mémoire pouvant être adressés par l'intermédiaire de descripteurs pour la mémorisation
--- de fichiers, et
--- des sous-systèmes du programme,
- une mémoire de tableaux du système, qui contient des descripteurs de tableaux du système qui se rapportent aux segments de mémoire du système de fonctionnement en temps réel,
caractérisé par
- un module d'application (ASM),
-- un système de fonctionnement à partage du temps,
-- un sous-système de programme (PSS) réalisé sous la forme d'un sous-système à sas (SUB),
-- une mémoire de tableaux de modules pouvant être sélectionnée en alternance par rapport à la mémoire de tableaux du système et qui contient
--- des descripteurs de tableaux de modules, qui se rapportent à des segments de la mémoire du système de fonctionnement à partage du temps et qui incluent au moins
---- un descripteur de segment d'état à partage du temps (TS) qui se rapporte à un segment d'état (TS-TSS), qui mémorise temporairement des données du processeur du système, du système de fonctionnement à partage du temps, et
---- un descripteur de segment de code à partage du temps (TS), qui se rapporte au segment de code d'un sous-programme de jonction d'interruption (IUB) du système de fonctionnement à partage du temps,
--- et qui contient en outre des descripteurs de communication, qui se rapportent à des segments d'intercommunication du système de fonctionnement en temps réel et qui peuvent être interprétés de façon identique aux descripteurs des tableaux du système qui sont contenus dans la mémoire de tableaux du système et se rapportent aux segments d'intercommunication, et qui incluent au moins
---- un descripteur de segments de code pour l'accès au segment de code du sous-système formant sas (SUB),
---- un descripteur de segments d'état pour l'accès à un segment d'état (RT-TSS), associé au sous-système formant sas (SUB), dans le système de fonctionnement en temps réel, et
---- un descripteur de segment de données pour l'accès à un segment de données d'intercommunication (IKD), le segment de données d'intercommunication (IKD),
----- mémorisant temporairement les informations d'entrée requises par chacun des deux systèmes de fonctionnement lors d'une transmission à l'autre système respectif de fonctionnement, et
----- contenant une zone de données (DF) servant à recevoir des signalisations pouvant être échangées par des sous-systèmes de programme (PSS, PSST) de l'autre système respectif de fonctionnement.

2. Système de communication ISDN à structure modulaire selon la revendication 1, caractérisé par le fait
- que les indications de commande sont prévues dans le sous-système formant sas (SUB) de telle sorte que
-- lors de l'activation du sous-système formant sas (SUB) dans le système de fonctionnement en temps réel, une commutation d'association du dispositif à processeur (»PA) du système s'effectue de la mémoire de tableaux du système à la mémoire de tableaux des modules et qu'ensuite, lors de l'appel du descripteur du segment à l'état TS, il se produit une commutation du processus sur le sous-programme de transition d'interruption (IUB), qui est alors interrompu,
- des indications de commande sont prévues dans le sous-programme d'interruption (IUB), de telle sorte
-- que lors de l'activation du sous-programme de transition d'interruption (IUB) dans le système de fonctionnement à partage du temps, sous l'effet de l'appel du descripteur du segment d'état de communication, il se produit une commutation du processus au sous-système formant sas (SUB), et
- que d'autres indications de commande sont prévues dans le sous-système formant sas (SUB) de telle sorte
-- qu'une commutation d'association du dispositif à processeur (»PA) du système de la mémoire de tableaux des modules à la mémoire de tableaux du système est exécutée avant que le sous-système formant sas (SUB) soit désactivé dans le système de fonctionnement en temps réel.

3. Système de communication ISDN à structure modulaire suivant l'une des revendications 1 à 2, caractérisé par le fait que le module d'application (SM) ainsi que l'unité d'interconnexion (SWU) et éventuellement d'autres modules fonctionnels, notamment une unité de réserve de données de fonctionnement (ADS), ont accès, par l'intermédiaire d'un bus commun du système, à des dispositifs techniques de service centraux et/ou de dispositifs techniques de sécurité centraux.

4. Système de communication ISDN à structure modulaire suivant l'une des revendications précédentes, caractérisé par le fait qu'en dehors d'une autre mémoire de tableaux du système, qui contient, pour des incitations (e, f, g) concernant le système de fonctionnement en temps réel, les descripteurs d'interruption en temps réel (RT), qui concernent des sous-programmes d'interruption associés au système de fonctionnement en temps réel, il est prévu une autre mémoire de tableaux de modules pouvant être sélectionnée en alternance et qui contient, pour des incitations (x, y) concernant le système de fonctionnement à partage du temps, des descripteurs d'interruptions à partage du temps (TS), qui concernent des sous-programmes d'interruptions associés au système de fonctionnement à partage du temps,
que l'autre mémoire de tableaux de modules contient pour les incitations (e, f, g) concernant le système de fonctionnement en temps réel, des descripteurs d'interruption, qui concernent le sous-programme de jonction d'interruption (IUB), et
que l'autre mémoire de tableaux du système contient, pour les incitations (x, y) concernant le système de fonctionnement en temps partagé, des descripteurs d'interruption, qui concernent un sous-programme de sauvegarde d'interruption (IRR) qui mémorise des incitations (x,y), concernant le système de fonctionnement à partage du temps, dans le segment de données d'intercommunication (IKD).

5. Système de communication ISDN à structure modulaire suivant la revendication 4, caractérisé par le fait que le sous-programme de sauvegarde d'interruption (IRR) mémorise les incitations, qui concerne le système à partage du temps, dans le segment de données d'intercommunication (IKD).

6. Système de communication ISDN à structure modulaire suivant l'une des revendications 4 à 5, caractérisé par le fait que dans le sous-programme de transition d'interruption (UB), les incitations (x,y), mémorisées par le sous-programme de sauvegarde d'interruption (IRR) dans le segment de données d'intercommunication (IKD), sont déterminées.

7. Système de communication ISDN à structure modulaire suivant l'une des revendications précédentes, caractérisé par le fait que des indications de commande sont prévues dans le sous-système formant sas (SUB) de telle sorte que, lors de chaque changement d'association entre la mémoire de tableaux de modules et la mémoire de tableaux du système, il se produit également un changement d'affectation avec l'autre mémoire respective de tableaux de modules ou l'autre mémoire respective de tableaux du système.

8. Système de communication ISDN à structure modulaire suivant l'une des revendications précédentes, caractérisé par le fait qu'une priorité comparativement faible est prévue pour le sous-système de programme, agencé sous la forme d'un sous-système formant sas (SUB), dans le système de fonctionnement en temps réel.

9. Système de communication ISDN à structure modulaire suivant l'une des revendications précédentes, caractérisé par le fait qu'un sous-système de programme à vide (Idletask) du système de fonctionnement en temps réel est agencé sous la forme d'un sous-système formant sas (SUB).

10. Système de communication ISDN à structure modulaire suivant l'une des revendications précédentes, caractérisé par le fait que la zone de données (DF) contient des signalisations pouvant être échangées entre le système de transport d'informations (INF) et le système de fonctionnement à partage du temps.

11. Système de communication ISDN à structure modulaire suivant l'une des revendications précédentes, caractérisé par le fait qu'un passage du système de fonctionnement à partage du temps au système de fonctionnement en temps réel est déclenché respectivement par une incitation périodique, qui concerne le système de fonctionnement en temps réel et qui conduit à la lecture des signalisations mémorisées dans la zone de données (DF), dans la mémoire respective d'entrée et de sortie (EAS), prévue individuellement pour les sous-systèmes du programme.

12. Système de communication ISDN à structure modulaire suivant l'une des revendications précédentes, caractérisé par le fait qu'au cours d'une activation successive, conforme aux priorités, de tous les sous-systèmes (PSS, PSST) du programme, les données, qui sont transférées respectivement par la zone de données (DF) dans la mémoire d'entrée et de sortie correspondante (EAS) et sont traitées par les sous-systèmes (PSS, PSST) du programme.

13. Système de communication ISDN à structure modulaire suivant l'une des revendications précédentes, caractérisé par le fait que la zone de données (DF) est agencée sous la forme d'une mémoire à deux ports pour des signalisations des sous-systèmes (PSS) du programme du système de fonctionnement en temps réel d'une part et des sous-systèmes (PSST) du programme du système de fonctionnement en temps partagé d'autre part.
